# EUROPEAN PATENT SPECIFICATION

(11) **EP 3 588 787 B1**
(45) Date of publication and mention of the grant of the patent: **28.04.2021**
(21) Application number: 18180995.5
(22) Date of filing: 29.06.2018
(51) Int. Cl.: H04B 1/02, H04B 17/10, H04B 1/04

(54) **METHOD AND APPARATUS FOR CALCULATING A RADIO FREQUENCY DELAY CAUSED BY FRONT-END COMPONENTS IN A TRANSMITTER**
VERFAHREN UND VORRICHTUNG ZUR BERECHNUNG EINER FUNKFREQUENZVERZÖGERUNG, DIE DURCH FRONTEND-KOMPONENTEN IN EINEM SENDER VERURSACHT WERDEN
PROCÉDÉ ET APPAREIL PERMETTANT DE CALCULER UN RETARD DE FRÉQUENCE RADIO PROVOQUÉ PAR DES COMPOSANTS FRONTAUX DANS UN ÉMETTEUR

(43) Date of publication of application: 01.01.2020
(73) Proprietor: Apple Inc., Cupertino, CA 95014 (US)
(72) Inventor: SOGL, Bernhard, 82008 Unterhaching (DE); FARABEGOLI, Alessio, 82008 Unterhaching (DE)
(74) Representative: Barton, Russell Glen

(56) References cited:
- US-A1- 2007 009 062
- US-A1- 2009 096 499
- US-A1- 2010 105 341
- US-B1- 9 867 155

## Description

### Field

Examples relate to estimation of front-end delay in a transmitter, more particularly, to a method and apparatus for calculating a radio frequency delay caused by front-end components based on measurements of a figure of merit in a transmitter system.

### Background

Linearization techniques such as envelope tracking (ET) and digital pre-distortion (DPD) are nowadays widely used to improve the transmitter performance. A proper implementation of the linearization techniques requires a precise knowledge of the front-end distortions which cause degradation of the transmitted signal linearity. The front-end distortions (usually expressed in terms of amplitude vs amplitude (AM/AM) and amplitude vs difference between input and output phases - (AM/PM) characteristics) are usually calculated by aligning the baseband amplitude (AM) and phase (PM) signals before and after the front-end components of a transmitter. This operation assumes a higher degree of complexity on transmitter systems, due to the high precision required.

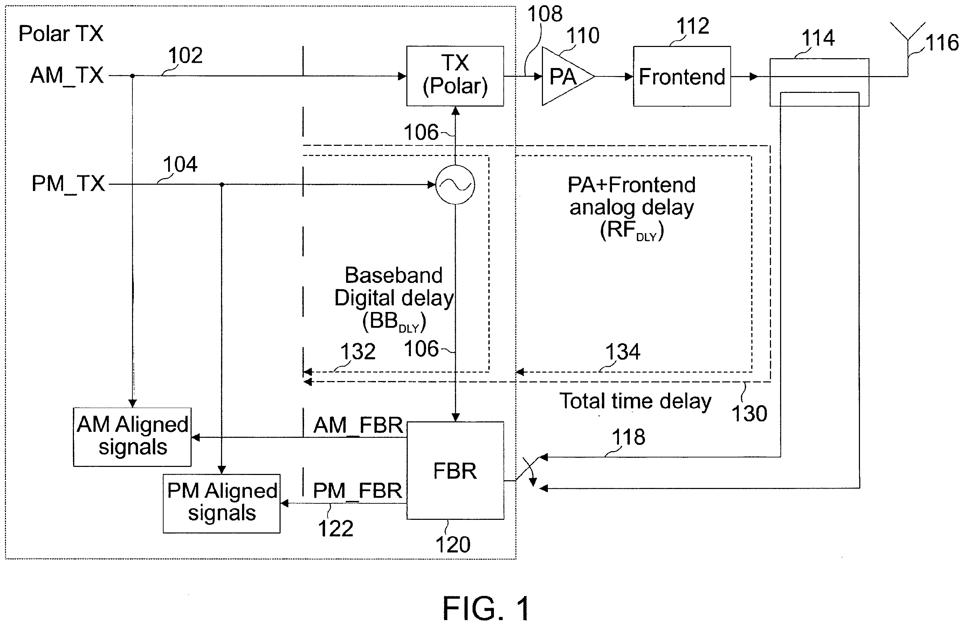

Fig. 1 shows a conventional polar transmitter with a feedback loop. The phase component 104 of a transmit signal is modulated with a local oscillator (LO) signal and an amplitude component 102 of the transmit signal is modulated with the phase-modulated LO signal 106. The modulated transmit signal 108 is then amplified by a power amplifier (PA) 110 and processed through front-end components 112, and then transmitted via an antenna 116. The transmit signal is tapped off by a coupler 114 and fed back to a receiver 120 (referred to hereinafter as a feedback receiver (FBR)). The phase-modulated LO signal 106 is also forwarded to the FBR 120 and mixed with the feedback signal 118 at the FBR 120. The FBR 120 recovers the amplitude component and the phase component from the feedback signal after mixing.

The total time delay 130 to align the signal at the transmitter (TX) input with the demodulated transmitted signal is given by the sum of a baseband delay (BB_{Dly}) 132 and an analog radio frequency (RF) delay (RF_{Dly}) 134. The baseband delay 132 may be constant and is dependent on the digital components. The RF delay 134 may be variable and may be caused by the power amplifier 110 and other RF front-end components 112. The characterization of the two delay components is needed while aligning the transmitted and received phase signals (the PM_TX signal and the PM_FBR signal) since an advanced polar transmitter utilizes the same phase locked loop (PLL) for both modulation and demodulation of the PM signals.

The PM_FBR signal 122 that is output from the FBR 120 includes two main components. One component is given by the signal path flowing through all the front-end which presents the front-end distortions, and the other component is the modulated PM_TX signal 106 by the PLL. A signal alignment requires the knowledge of both baseband and RF delays to correctly reconstruct the two components using the PM TX signal.

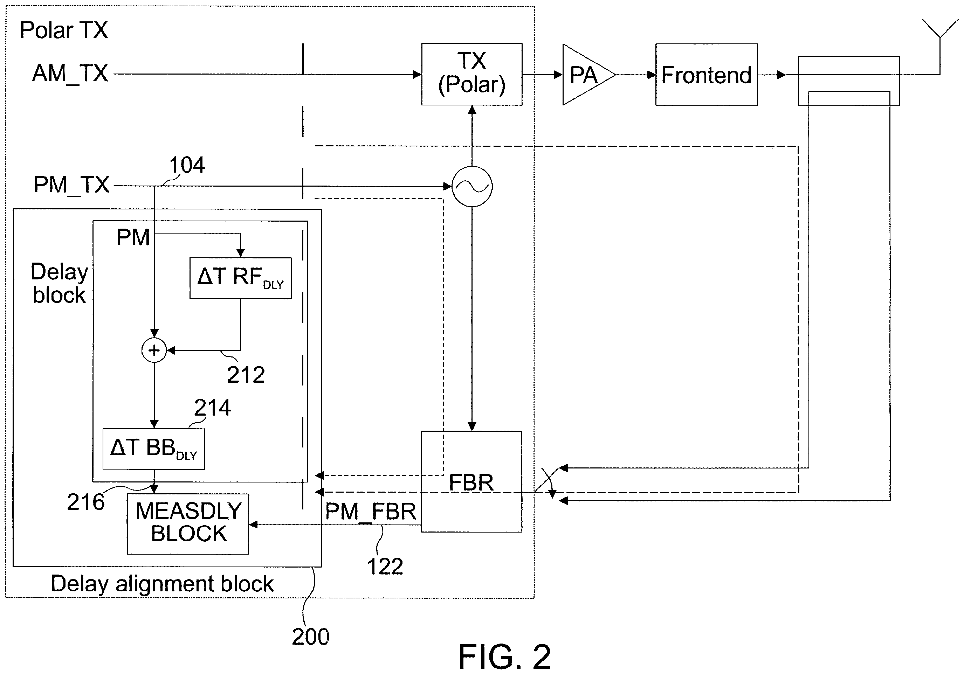

Fig. 2 shows a conventional system for RF delay measurements. Conventional systems use a complex delay alignment block 200 to calculate the two delay components. In the conventional solution, the first step is to create a PM FBR-like signal 216 by adding the phase component of the transmit signal (PM_TX) 104 with a delayed version 212 (RF delay) of itself and adding a baseband delay 214. This may be done in the delay block 210. The resulting signal 216 may then be compared to the output 122 of the FBR (PM_FBR) to calculate the baseband and RF delays. While the baseband delay is calculated offline by using time-consuming register-transfer level (RTL) hardware simulations, the delay alignment block 200 performs an estimation of the RF delay by implementing a hardware optimization algorithm based on minimizing the variance between the modified PM TX signal 216 and the PM_FBR signal 122. This may be done during calibration since the RF delay needs to be calculated for each frequency point. To calculate it, a sweep between different RF delay values is done in the delay block 210 until the difference between the two input signals is minimized. The hardware calculation result is a figure of merit (FOM) which describes the remaining variance between the two signals once alignment is performed. A low value of the FOM indicates a good correlation between the signals, and therefore a good time alignment. Prior art solutions are known from, for example, US 9 867 155, concerning the calibration of a polar transmitter; US 2010/105341, concerning the calibration and control of the phase and amplitude modulation paths of a transmitter; US 2009/096499, measuring delay using a correlation procedure; and US 2007/009062, determining the delay using the symbols to be transmitted.

This conventional solution presents the following disadvantages. A proper time alignment is based on two variables: the baseband delay and the RF delay. A pre-simulation needs to be done to find the optimum baseband delay values for each radio access technology (RAT) and consequently reduce the degree of freedom of the minimization algorithm. In addition, the delay estimation is done using noise-like signals. Therefore, the results of the FOM are strongly dependent on the signal itself and cannot be directly compared from iteration to iteration. An average value over 8 iterations is estimated to have a comparable FOM result, requiring around 0.5 ms with the current hardware implementation.

### Brief description of the Figures

Some examples of apparatuses and/or methods will be described in the following by way of example only, and with reference to the accompanying figures, in which
Fig. 1 shows a conventional polar transmitter with a feedback loop;
Fig. 2 shows a conventional polar system for RF delay measurements;
Fig. 3 shows a structure of an example transmitter including an RF delay measurement capability in accordance with one example;
Fig. 4A shows a structure of an example I/Q transmitter including an RF delay measurement capability in accordance with one example;
Fig. 4B shows a structure of an example polar transmitter including an RF delay measurement capability in accordance with one example;
Fig. 5A shows a periodic trapezoidal phase signal as an example of the custom phase signal;
Fig. 5B shows the received phase signals of the periodic trapezoidal phase signal of Fig. 5A with different delays;
Fig. 5C shows the relation between the delay and the delta phase of the received PM signal;
Figs. 6A and 6B show another example of figure of merit that may be used in calculating the RF delay and the relation between the FOM and the delay, respectively.
Fig. 7A shows an example custom periodic phase signal;
Fig. 7B shows the demodulated phase signal at the FBR output after delay through the power amplifier and other front-end components;
Fig. 8 shows an example of RF delay FOM measured based on the custom signal shown in Fig. 7A;
Fig. 9 shows the relationship between the RF delay and the FOM calculated in accordance with the example shown in Fig. 8;
Figs. 10A and 10B show comparison of the RF delay results obtained with the conventional method and the example method disclosed herein for the Bands 1 and 39, respectively; and Fig. 11 illustrates a user device in accordance with an aspect.

### Detailed Description

Various examples will now be described more fully with reference to the accompanying drawings in which some examples are illustrated. In the figures, the thicknesses of lines, layers and/or regions may be exaggerated for clarity.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

Examples are disclosed for simplified methods and apparatus to estimate the RF delay caused by front-end components in a transmitter based on measurements of particular phase characteristics of a customized signal. The examples are applicable to both a polar transmitter and an in-phase/quadrature (I/Q) transmitter.

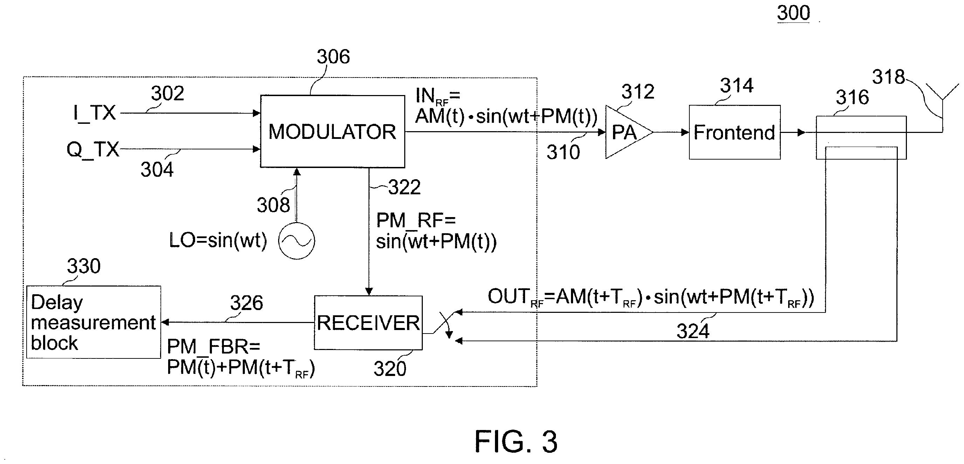

Fig. 3 shows a structure of an example transmitter 300 including an RF delay measurement capability in accordance with one example. The transmitter 300 includes a transmit circuitry, a coupler, a receive circuitry, and a delay measurement unit. The transmit circuitry including a modulator 306, a power amplifier 312, and other front-end components 314 is configured to modulate a local oscillator signal with a custom phase signal and transmit the modulated signal (i.e. the custom signal is upconverted using the LO signal). The coupler 316 is configured to couple the transmitted signal as a feedback signal. The receive circuitry including a feedback receiver 320 is configured to mix the feedback signal with the local oscillator signal modulated with a phase component of the custom phase signal and demodulate the mixed signal to extract a phase component of the feedback signal. The delay measurement unit 330 is configured to calculate a figure of merit using the phase component of the mixed signal 326 and calculate an RF delay based on the figure of merit.

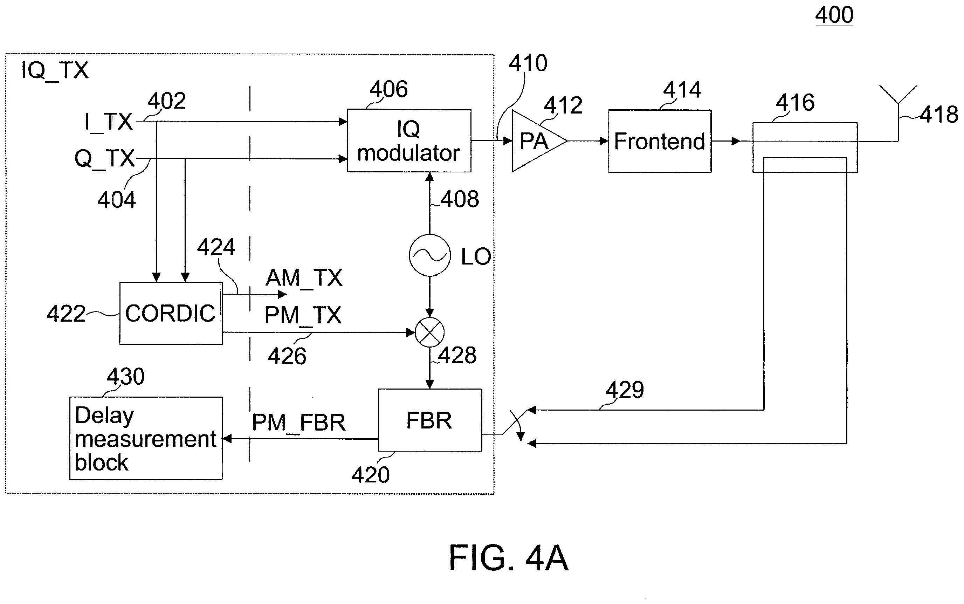

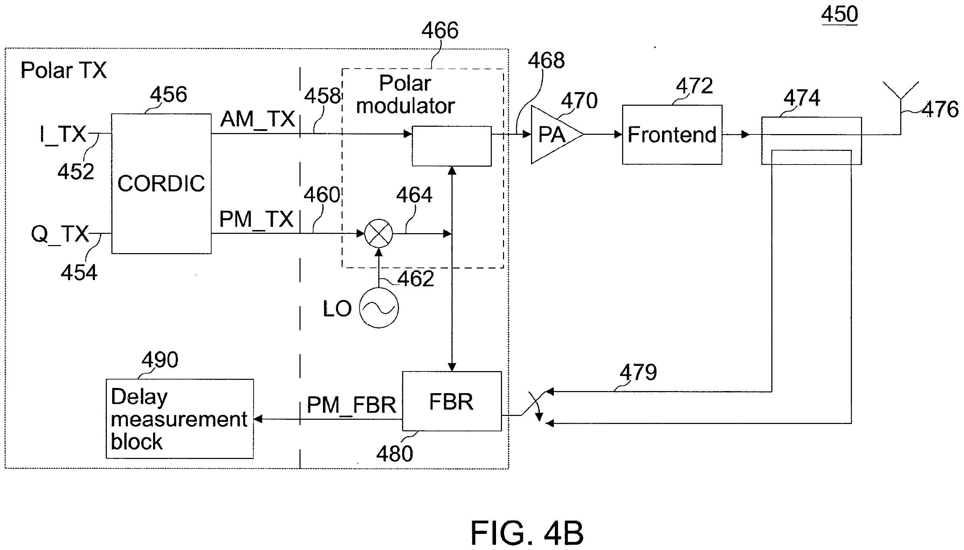

The transmitter 300 may receive a transmit signal in the form of in-phase (I) and quadrature (Q) components 302/304 or alternatively in the form of polar symbols. The transmit signal is modulated by a modulator 306 with a local oscillator signal 308. The modulator 306 may be a polar modulator or an I/Q modulator. The modulated transmit signal 310 may be represented as follows: IN_{RF}=AM(t)×sin(ωt+PM(t)). The modulated transmit signal 310 is then processed by RF front-end components including a PA 312 and other front-end components 314, (e.g. filters, etc.). The transmit signal is then transmitted via an antenna 318. The transmitted signal is tapped off by a coupler 316 and fed back to a receiver (i.e. an FBR) 320 as a feedback signal. The tapped signal may be represented as follows: OUT_{RF}=AM(t+T_{RF})×sin(ωt+PM(t+T_{RF})), where T_{RF} is the RF front-end delay. It should be noted that the architecture of the transmitters 300, 400, 450 in Figs. 3, 4A and 4B are just an example, and the position of the elements of the transmitter 300, 400, 450 may be arranged differently. For example, the position of the power amplifier 312, the front-end components 314, and the coupler 316 may be arranged differently (e.g. the front-end component 314 and the coupler 316 may be switched). In this case the delay calculated is the delay inserted by the PA 312.

The FBR 320 also receives a phase-modulated RF signal 322 (a modulated LO signal by a phase component of the transmit signal (i.e. the custom phase signal)) from the modulator 306. The phase-modulated RF signal may be represented as follows: PM_RF=sin(ωt+PM(t)). The FBR 320 mixes the phase-modulated LO signal with the feedback signal 324 to demodulate the feedback signal 324 and recovers a phase component after mixing. The LO signal modulated with the phase component of the custom phase signal is used to demodulate the feedback signal. The recovered phase component 326 from the mixed signal may be represented as follows: PM_FBR=PM(t) + PM(t+T_{RF})). The RF delay measurement block 330 calculates a figure of merit which is directly related to the RF delay from the phase component 326 and calculates an RF delay based on the figure of merit.

Fig. 4A shows a structure of an example I/Q transmitter 400 including an RF delay measurement capability in accordance with one example. The I and Q components 402/404 of the transmit signal are modulated by an I/Q modulator 406 with a local oscillator signal 408. The modulated transmit signal 410 is then processed by RF front-end components including a PA 412 and other front-end components 414, (e.g. filters, etc.) and transmitted via an antenna 418. The transmitted signal is tapped off by a coupler 416 and fed back to an FBR 420 as a feedback signal.

The I/Q components 402/404 of the transmit signal may be converted to an amplitude component 424 and a phase component 426 by a coordinate rotation digital computer (CORDIC) 422 (or any coordinate conversion device). The LO signal is modulated with the phase component 426 of the transmit signal and the phase-modulated RF signal 428 (a modulated LO signal by a phase component of the transmit signal) is sent to the FBR 420.

The FBR 420 mixes the phase-modulated RF signal 428 and the feedback signal 429 to demodulate the feedback signal 429 and recovers a phase component after mixing. The RF delay measurement block 430 calculates a figure of merit which is directly related to the RF delay from the recovered phase component and calculates an RF delay based on the figure of merit.

Fig. 4B shows a structure of an example polar transmitter 450 including an RF delay measurement capability in accordance with one example. The I/Q components 452/454 of the transmit signal may be converted to an amplitude component 458 and a phase component 460 by a CORDIC 456 (or any coordinate conversion device). The LO signal 462 is modulated with the phase component 460 of the transmit signal and the amplitude component 458 of the transmit signal is then modulated with the phase-modulated LO signal 464 by the polar modulator 466. The modulated transmit signal 468 is then processed by RF front-end components including a PA 470 and other front-end components 472, (e.g. filters, etc.) and transmitted via an antenna 476. The transmitted signal is tapped off by a coupler 474 and fed back to an FBR 480 as a feedback signal 479. The phase-modulated RF signal 464 (a modulated LO signal by a phase component of the transmit signal) is sent to the FBR 480.

The FBR 480 mixes the phase-modulated RF signal 464 and the feedback signal 479 to demodulate the feedback signal 479 and recovers a phase component after mixing. The RF delay measurement block 490 calculates a figure of merit which is directly related to the RF delay from the recovered phase component and calculates an RF delay based on the figure of merit.

In examples, a custom phase signal which shows particular phase characteristics is used to measure the RF delay. The LO signal is modulated with the custom phase signal and the modulated LO signal is transmitted through the transmit chain. The phase-modulated LO signal (the LO signal modulated with the phase component of the custom phase signal) is also fed into the FBR 320, 420, 480. The FBR 320, 420, 480 receives the phase-modulated LO signal and a feedback signal from the coupler 316, 416, 476, mixes them to demodulate the feedback signal, and recovers a phase component after mixing. The delay measurement block 330, 430, 490 then estimates an FOM which is directly related to the RF delay itself from the recovered phase component.

In the examples, as shown in Figs. 3, 4A, and 4B, no signal path is required from the phase component of the transmit signal (PM_TX) to the delay measurement block 330, 430, 490. This simplifies the overall transmitter architecture since a hardware delay block is not required. In addition, the RF delay estimation is based on the use of the customized signals and not using noise-like signals as in the conventional implementations. This has an impact on the calculation time, since in this way a precise RF delay value can be estimated on a single memory reading (e.g. reading of 128 samples from the receiver random access memory (RAM)). The delay FOM may be calculated online based on the measured RF delay variable. In the disclosed examples, the baseband delay does not need to be calculated.

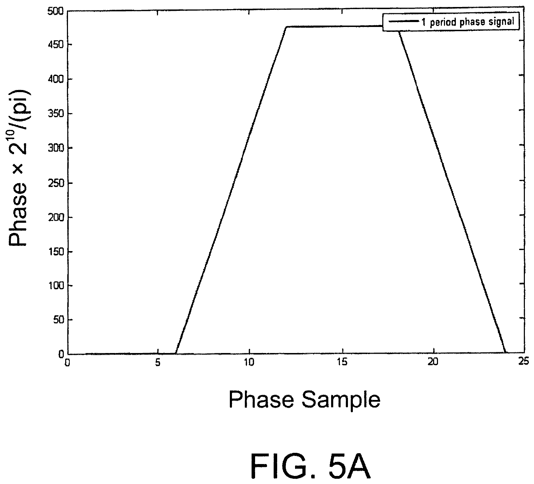

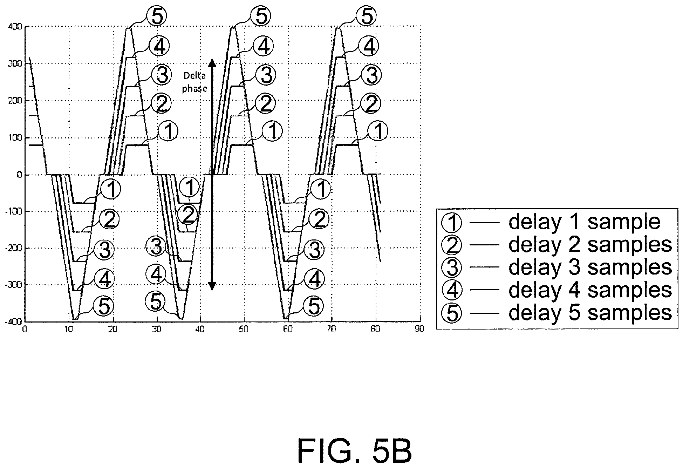

In one example, the custom phase signal may have a constant envelope and a trapezoidal periodic phase. Fig. 5A shows a periodic trapezoidal phase signal as an example of the custom phase signal. Fig. 5B shows the received phase signals (PM_FBR) of the periodic trapezoidal phase signal of Fig. 5A with different delays (delays 1 - 5 in this example), which are obtained by demodulation of the feedback signal in the FBR 320, 420, 480. The sampling rate of the demodulated signal may be taken into account to correctly scale the delay obtained.

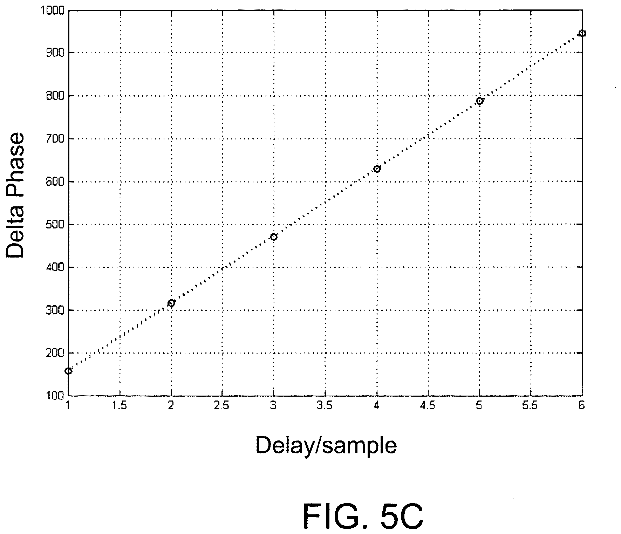

The demodulated PM signal by the FBR 320, 420, 480 is a signal which contains the two phase components of the transmitted custom phase signal delayed by different times. In Fig. 5B, the resulting phase signals for different time delays are plotted (expressed as sample delay in Fig. 5B, therefore independent from the sampling rate of the signal itself). As shown in Fig. 5B, the delta phase (e.g. defined as the maximum phase minus the minimum phase) increases as the RF delay increases from delay 1 to delay 5. Fig. 5C shows the relation between the delay (in samples) and the delta phase of the received PM signal (PM_FBR). A direct and precise relation between the delta phase and the delay mismatch (i.e. the RF delay) may be constructed, and the delta phase may be measured as an FOM and the RF delay may be estimated from the measured delta phase.

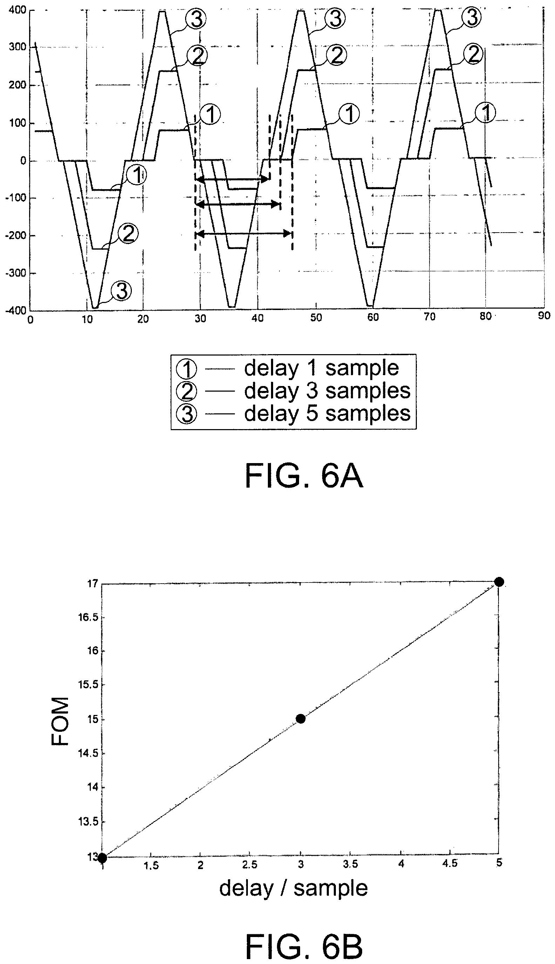

Figs. 6A and 6B show another example of figure of merit that may be used in calculating the RF delay and the relation between the FOM and the delay, respectively. In this example, the figure of merit may be built taking into account the time that the received phase signal is zero or negative during one period. In this case, it may be directly related to the delay samples as shown in Fig. 6B.

The figure of merits disclosed above and below are merely provided as examples, and any other forms of figure of merits may be used.

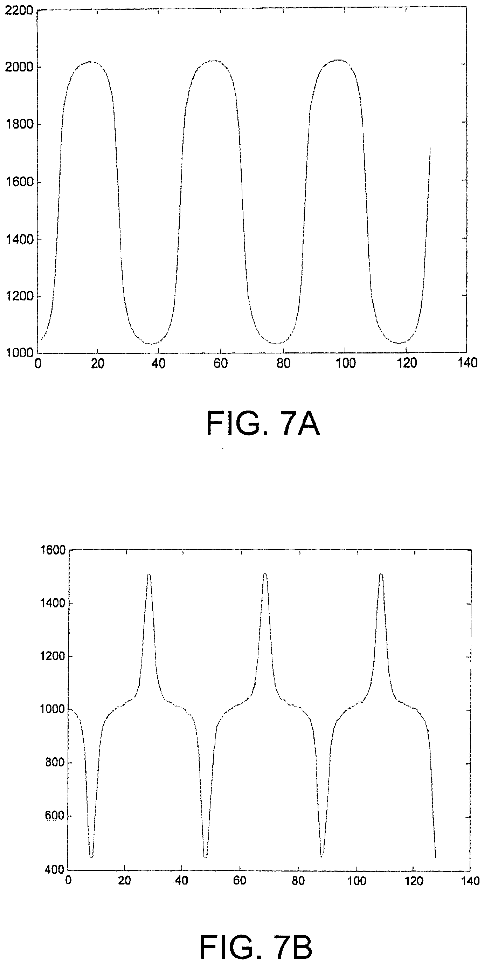

In another example, a custom periodic phase signal may be used. The custom phase signal may present a constant envelope and a custom phase. Fig. 7A shows an example custom periodic phase signal. Fig. 7B shows the demodulated phase signal at the FBR output after delay through the power amplifier and other front-end components (e.g. duplexer filters, etc.). The recorded signal in Fig. 7B is the baseband phase signal result of the sum of the signal in Fig. 7A with a delayed version of itself.

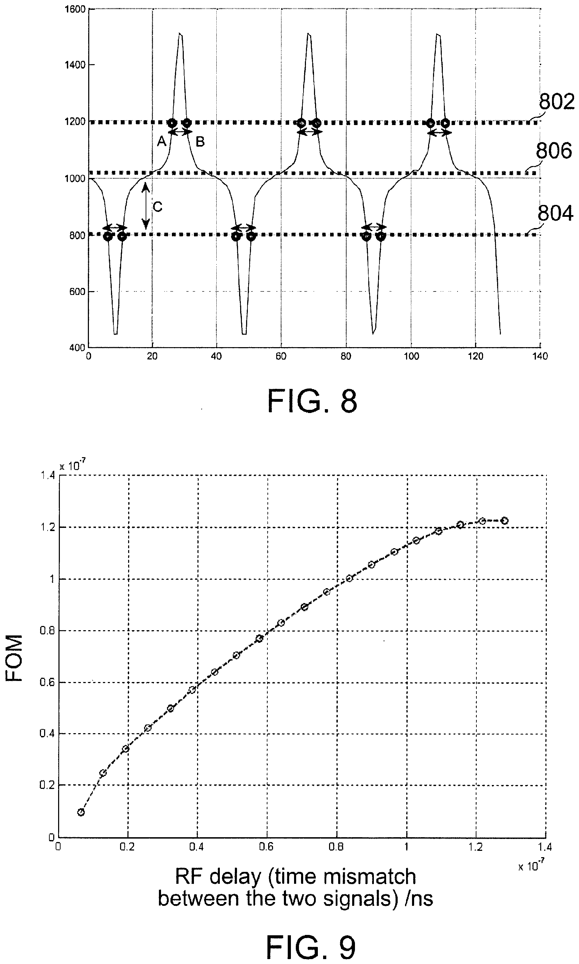

Fig. 8 shows an example of RF delay FOM measured based on the custom signal shown in Fig. 7A. For example, the distance between points A and B may be used as an FOM to define the time mismatch (i.e. the RF delay) between the two signals. Points A and B may be defined as the intersection of the phase signal with a horizontal asymptote 802/804 at a fixed distance C from the average phase 806.

This FOM offers advantages. It is easy to calculate. For example, 128 samples would be enough to record 3 to 6 values of FOM and obtain an average delay out of them. The FBR noise has a low impact and the calculated delay may be averaged in one FBR RAM reading operation.

After calculation of the RF delay, the transmitter (e.g. a processor) may determine control parameters for DPD, adaptive ET, iterative transmit feedback loop (ITFL), or the like based on the comparison between time aligned signals of the transmitted signal and the feedback signal. It should be noted that the custom phase signals and the FOMs shown in Figs. 5A-8 are merely examples and any other custom phase signals and FOMs may be defined.

Fig. 9 shows the relationship between the RF delay and the FOM calculated in accordance with the example shown in Fig. 8. As shown in Fig. 9, there is a good correlation between the FOM calculated in accordance with this example and the RF delay.

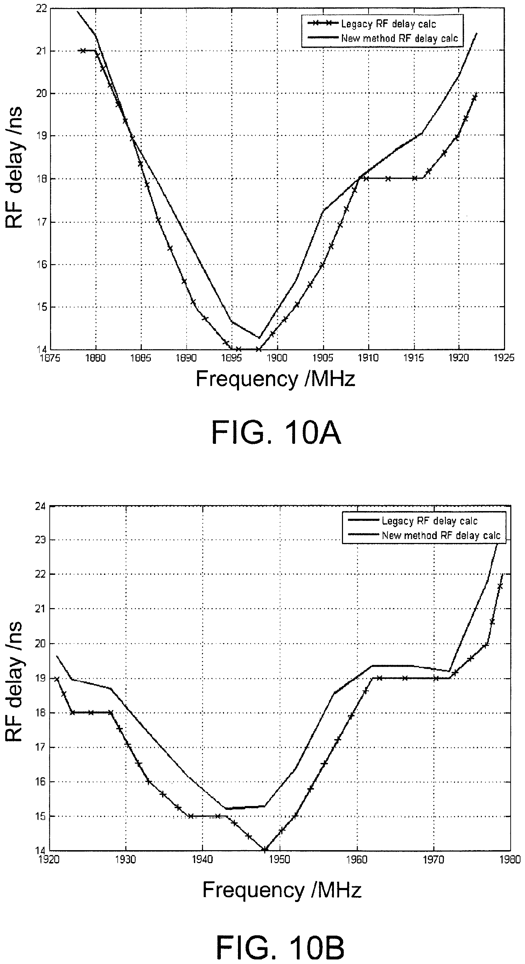

Figs. 10A and 10B show comparison of the RF delay results obtained with the conventional method and the example method disclosed herein for the Bands 1 and 39 (as an example of the Long Term Evolution (LTE) bands), respectively. As shown in Figs. 10A and 10B, with the example methods disclosed herein it is possible to obtain a precise estimation of the RF delay in all the duplexer band.

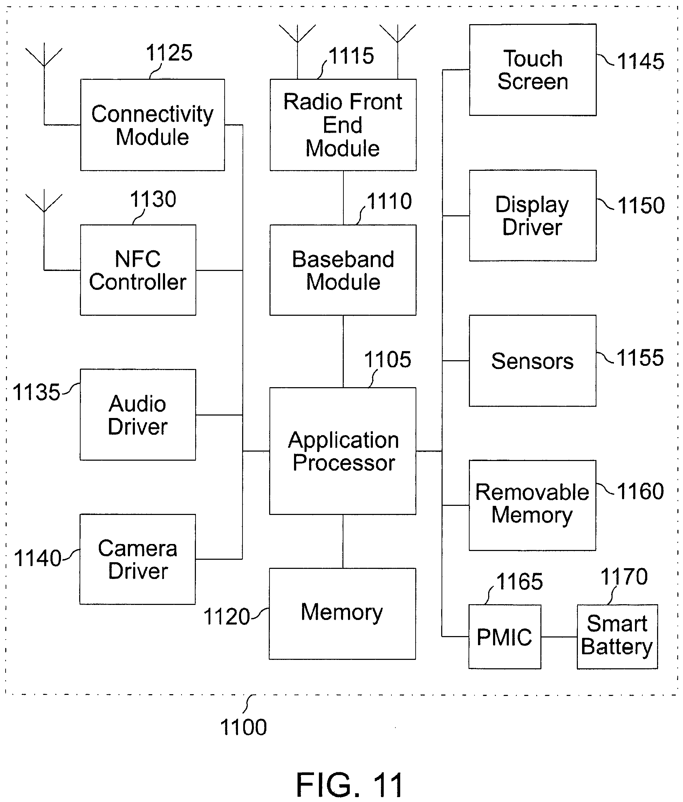

Fig. 11 illustrates a user device 1100 (e.g. a UE) in accordance with an aspect. The user device 1100 may be a mobile device in some aspects and includes an application processor 1105, baseband processor 1110 (also referred to as a baseband module), radio front end module (RFEM) 1115, memory 1120, connectivity module 1125, near field communication (NFC) controller 1130, audio driver 1135, camera driver 1140, touch screen 1145, display driver 1150, sensors 1155, removable memory 1160, power management integrated circuit (PMIC) 1165 and smart battery 1170.

In some aspects, application processor 1105 may include, for example, one or more CPU cores and one or more of cache memory, low drop-out voltage regulators (LDOs), interrupt controllers, serial interfaces such as serial peripheral interface (SPI), inter-integrated circuit (I²C) or universal programmable serial interface module, real time clock (RTC), timer-counters including interval and watchdog timers, general purpose input-output (IO), memory card controllers such as secure digital / multi-media card (SD/MMC) or similar, universal serial bus (USB) interfaces, mobile industry processor interface (MIPI) interfaces and Joint Test Access Group (JTAG) test access ports.

In some aspects, baseband module 1110 may be implemented, for example, as a solder-down substrate including one or more integrated circuits, a single packaged integrated circuit soldered to a main circuit board, and/or a multi-chip module containing two or more integrated circuits. Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

The scope of protection is defined by the accompanying set of claims.

## Claims

1. An apparatus for calculating a radio frequency, RF, delay caused by front-end components (312, 314) in a transmitter, the apparatus comprising:
a transmit circuitry (306, 406, 466) configured to modulate a local oscillator signal with a custom phase signal and transmit the modulated signal, wherein the custom phase signal is a trapezoidal phase signal or a periodic phase signal;
a coupler (316, 416, 476) configured to couple the transmitted signal as a feedback signal;
a receive circuitry (320, 420, 480) configured to mix the feedback signal with the local oscillator signal modulated with a phase of the custom phase signal and demodulate the mixed signal to extract a phase component from the mixed signal; and
a delay measurement unit (330, 430, 490) configured to calculate a figure of merit which is directly related to the RF delay from the phase component of the mixed signal and calculate the RF delay based on the figure of merit.

2. The apparatus of claim 1, wherein the custom phase signal has a constant envelope.

3. The apparatus of claim 2, wherein the figure of merit is a delta phase defined as a maximum phase minus a minimum phase of the mixed signal.

4. The apparatus of claim 1, wherein the figure of merit is a distance between points of intersection of a phase signal with a horizontal asymptote at a fixed distance from an average phase.

5. The apparatus as in any one of claims 1-4, wherein the transmitter is either a polar transmitter or an in-phase/quadrature transmitter.

6. The apparatus as in any one of claims 1-5, further comprising:
a processor configured to determine control parameters for digital pre-distortion, DPD, envelop tracking, ET, and/or iterative transmit feedback loop, ITFL, based on the RF delay.

7. A method for calculating a radio frequency, RF, delay caused by front-end components in a transmitter, the method comprising:
generating a custom phase signal, wherein the custom phase signal is a trapezoidal phase signal or a periodic phase signal;
modulating a local oscillator signal with the custom phase signal;
transmitting the modulated signal via a transmit chain including the front-end components;
coupling the transmitted signal to a receiver as a feedback signal;
mixing the feedback signal with the local oscillator signal modulated with a phase of the custom phase signal;
demodulating the mixed signal to extract a phase component from the mixed signal;
calculating a figure of merit which is directly related to the RF delay from the phase component of the mixed signal; and
calculating the RF delay from the figure of merit.

8. The method of claim 7, wherein the custom phase signal has a constant envelope.

9. The method of claim 8, wherein the figure of merit is a delta phase defined as a maximum phase minus a minimum phase of the mixed signal.

10. The method of claim 7, wherein the figure of merit is a distance between points of intersection of a phase signal with a horizontal asymptote at a fixed distance from an average phase.

11. The method as in any one of claims 7-10, wherein the transmitter is either a polar transmitter or an in-phase/quadrature transmitter.

12. The method as in any one of claims 7-11, further comprising:
determining control parameters for digital pre-distortion, DPD, envelop tracking, ET, and/or iterative transmit feedback loop, ITFL, based on the RF delay.

13. A machine-readable medium including code, when executed, to cause a machine to perform a method as in any one of claims 7-12.

## Patentansprüche

1. Apparat zum Berechnen einer Funkfrequenz-, RF-, Verzögerung verursacht von Front-End-Komponenten (312, 314) in einem Sender, der Apparat umfassend:
eine Sendeschaltung (306, 406, 466) konfiguriert zum Modulieren eines lokalen Oszillatorsignals mit einem benutzerdefinierten Phasensignal und Senden des modulierten Signals, wobei das benutzerdefinierte Phasensignal ein trapezförmiges Phasensignal oder ein periodisches Phasensignal ist;
einen Koppler (316, 416, 476) konfiguriert zum Koppeln des gesendeten Signals als ein Rückkopplungssignal;
eine Empfangsschaltung (320, 420, 480) konfiguriert zum Mischen des Rückkopplungssignals mit dem lokalen Oszillatorsignal moduliert mit einer Phase des benutzerdefinierten Phasensignals und Demodulieren des gemischten Signals zum Extrahieren einer Phasenkomponente von dem gemischten Signal; und
eine Verzögerungsmesseinheit (330, 430, 490) konfiguriert zum Berechnen eines Gütefaktors, welcher direkt bezogen ist auf die RF-Verzögerung von der Phasenkomponente des gemischten Signals und Berechnen der RF-Verzögerung basierend auf dem Gütefaktor.

2. Apparat nach Anspruch 1, wobei das benutzerdefinierte Signal eine konstante Hüllkurve aufweist.

3. Apparat nach Anspruch 2, wobei der Gütefaktor eine Delta-Phase ist definiert als eine maximale Phase minus einer minimalen Phase des gemischten Signals.

4. Apparat nach Anspruch 1, wobei der Gütefaktor eine Distanz zwischen Punkten einer Schnittstelle eines Phasensignals mit einer horizontalen Asymptote an einer festen Distanz von einer Durchschnittsphase ist.

5. Apparat nach einem der Ansprüche 1-4, wobei der Sender entweder ein polarer Sender oder ein In-Phase-/Quadratur- Sender ist.

6. Apparat nach einem der Ansprüche 1-5, ferner umfassend:
einen Prozessor konfiguriert zum Bestimmen von Kontrollparametern für digitale Vorverzerrung, DPD, Envelop-Tracking, ET, und/oder iterative Sendungsrückkopplungsschleife, ITFL, basierend auf der RF-Verzögerung.

7. Verfahren zum Berechnen einer Funkfrequenz-, RF-, Verzögerung verursacht von Front-End-Komponenten in einem Sender, das Verfahren umfassend:
Erzeugen eines benutzerdefinierten Signals, wobei das benutzerdefinierte Phasensignal ein trapezförmiges Phasensignal oder ein periodisches Phasensignal ist;
Modulieren eines lokalen Oszillatorsignals mit dem benutzerdefinierten Phasensignal; Senden des modulierten Signals über eine Sendekette beinhaltend die Front-End-Komponenten;
Koppeln des transmittierten Signals zu einem Empfänger als ein Rückkopplungssignal; Mischen des Rückkopplungssignals mit dem lokalen Oszillatorsignal moduliert mit einer Phase des benutzerdefinierten Phasensignals;
Demodulieren des gemischten Signals zum Extrahieren einer Phasenkomponente des gemischten Signals;
Berechnen eines Gütefaktors, welcher direkt bezogen ist auf die RF-Verzögerung von der Phasenkomponente des gemischten Signals; und
Berechnen der RF-Verzögerung aus dem Gütefaktor.

8. Verfahren nach Anspruch 7, wobei das benutzerdefinierte Phasensignal eine konstante Hüllkurve aufweist.

9. Verfahren nach Anspruch 8, wobei der Gütefaktor eine Delta-Phase ist definiert als eine maximale Phase minus einer minimalen Phase des gemischten Signals.

10. Verfahren nach Anspruch 7, wobei der Gütefaktor eine Distanz zwischen Punkten einer Schnittstelle eines Phasensignals mit einer horizontalen Asymptote an einer festen Distanz von einer Durchschnittsphase ist.

11. Verfahren nach Anspruch 7-10, wobei der Sender entweder ein polarer Sender oder ein In-Phase-/Quadratur- Sender ist.

12. Verfahren nach Anspruch 7-11, ferner umfassend:
Bestimmen von Kontrollparametern für digitale Vorverzerrung, DPD, Envelope-Tracking, ET, und/oder iterative Senderückkopplungsschleife, ITFL, basierend auf der RF -Verzögerung.

13. Maschinen-lesbares Medium beinhaltend Code, der wenn ausgeführt, eine Maschine veranlasst ein Verfahren nach einem der Ansprüche 7-12 durchzuführen.

## Revendications

1. Un appareil pour le calcul d'un retard radiofréquence, RF, provoqué par des composants frontaux (312, 314) d'un émetteur, l'appareil comprenant :
une circuiterie d'émission (306, 406, 466) configurée pour moduler un signal d'oscillateur local par un signal de phase individualisé, et pour émettre le signal modulé,
le signal de phase individualisé étant un signal de phase trapézoïdal ou un signal de phase périodique ;
un coupleur (316, 416, 476) configuré pour coupler le signal émis en tant que signal de réaction ;
une circuiterie de réception (320, 420, 480) configurée pour mélanger le signal de réaction avec le signal d'oscillateur local modulé par une phase du signal de phase individualisé, et démoduler le signal mélangé pour extraire une composante de phase du signal mélangé ; et
une unité de mesure de retard (330, 430, 490) configurée pour calculer une valeur de mérite qui est directement liée au retard RF à partir de la composante de phase du signal mélangé, et calculer le retard RF sur la base de la valeur de mérite.

2. L'appareil de la revendication 1, dans lequel le signal de phase individualisé a une enveloppe constante.

3. L'appareil de la revendication 2, dans lequel la valeur de mérite est une différence de phase définie comme étant une phase maximale moins une phase minimale du signal mélangé.

4. L'appareil de la revendication 1, dans lequel la valeur de mérite est une distance entre des points d'intersection d'un signal de phase avec une asymptote horizontale située à une distance fixe d'une phase moyenne.

5. L'appareil selon l'une des revendications 1 à 4, dans lequel l'émetteur est soit un émetteur polaire soit un émetteur en phase/en quadrature.

6. L'appareil selon l'une des revendications 1 à 5, comprenant en outre :
un processeur configuré pour déterminer des paramètres de contrôle pour la pré-distorsion numérique, DPD, le suivi d'enveloppe, ET, et/ou une boucle de rétroaction d'émission itérative, ITFL, sur la base du retard RF.

7. Un procédé de calcul d'un retard radiofréquence, RF, provoqué par des composants frontaux d'un émetteur, le procédé comprenant :
la génération d'un signal de phase individualisé, le signal de phase individualisé étant un signal de phase trapézoïdal ou un signal de phase périodique ;
la modulation d'un signal d'oscillateur local par le signal de phase individualisé ;
l'émission du signal modulé via une chaîne d'émission incluant les composants frontaux ;
le couplage du signal émis à un récepteur en tant que signal de réaction ;
le mélange du signal de réaction avec le signal d'oscillateur local modulé par une phase du signal de phase individualisé ;
la démodulation du signal mélangé pour extraire une composante de phase du signal mélangé ;
le calcul d'une valeur de mérite qui est directement liée au retard RF à partir de la composante de phase du signal mélangé ; et
le calcul du retard RF à partir de la valeur de mérite.

8. Le procédé de la revendication 7, dans lequel le signal de phase individualisé a une enveloppe constante.

9. Le procédé de la revendication 8, dans lequel la valeur de mérite est une différence de phase définie comme étant une phase maximale moins une phase minimale du signal mélangé.

10. Le procédé de la revendication 7, dans lequel la valeur de mérite est une distance entre des points d'intersection d'un signal de phase avec une asymptote horizontale située à une distance fixe d'une phase moyenne.

11. Le procédé selon l'une des revendications 7 à 10, dans lequel l'émetteur est soit un émetteur polaire soit un émetteur en phase/en quadrature.

12. Le procédé selon l'une des revendications 7 à 11, comprenant en outre :
la détermination de paramètres de contrôle pour la pré-distorsion numérique, DPD, le suivi d'enveloppe, ET, et/ou une boucle de rétroaction d'émission itérative, ITFL, sur la base du retard RF.

13. Un support lisible par machine incluant du code pour faire en sorte, lorsqu'il est exécuté, qu'une machine mette en œuvre un procédé selon l'une des revendications 7 à 12.
